# EUROPEAN PATENT APPLICATION

(11) **EP 1 593 652 A1**
(43) Date of publication of application: **09.11.2005**
(21) Application number: 04703893.0
(22) Date of filing: 21.01.2004
(51) Int. Cl.: C01F 5/22, C01F 5/14, C08K 3/22, C08K 3/34, C08L 101/00, C23C 26/00

(54) **MAGNESIUM HYDROXIDE, MAGNESIUM HYDROXIDE/SILICA COMPOSITE PARTICLE, PROCESSES FOR PRODUCING THESE, METHOD OF SURFACE TREATMENT OF THESE, AND RESIN COMPOSITION AND ELECTRIC WIRE CONTAINING OR PRODUCED WITH THESE**

(30) Priority: 21.01.2003 JP 2003012671
(71) Applicant: YAZAKI CORPORATION, Minato-ku Tokyo 108-8333 (JP)
(72) Inventor: KODAMA, Koji, Yazaki Parts Co., Ltd., Susono-shi, Shizuoka 410-1194 (JP); EGASHIRA, Makoto, Nagasaki-shi, Nagasaki 852-8065 (JP)
(74) Representative: Grünecker, Kinkeldey, Stockmair & Schwanhäusser Anwaltssozietät
(86) International application number: PCT/JP2004/000488
(87) International publication number: WO 2004/065300

(57) **Abstract**

Provided are magnesium hydroxide and composite magnesium hydroxide-silica particle which can make resin composition and electric wire or cable which are excellent in flame retardancy and good in wear resistance and other aspects of strength, elastic modulus, etc., method for the manufacture thereof, method for the surface treatment thereof, and resin composition and electric wire or cable made by using the same. They are obtained by, for example, reacting a magnesium salt and a metal hydroxide or reacting a magnesium salt and a metal hydroxide in the presence of silica particles and can be incorporated with a resin to form a resin composition. A resin composition **characterized by** containing magnesium hydroxide particles, silica particles and a resin preferably contains fumed silica particles having their surfaces treated with a methyl group.

## Description

### FIELD OF THE INVENTION

This inventionrelates to magnesium hydroxide, composite magnesium hydroxide-silica particle, method for the manufacture thereof, method for the surface treatment thereof and resin composition and electric wire or cable made by using the same. More particularly, it relates to magnesium hydroxide and composite magnesium hydroxide-silica particle which can make resin composition and electric wire or cable which are excellent in flame retardancy and good in wear resistance and other aspects of strength, elastic modulus, etc., method for the manufacture thereof, method for the surface treatment thereof, and resin composition and electric wire or cable made by using the same.

### BACKGROUND ART

Magnesium hydroxide has recently been increasing its use as an excellent flame retardant which is nontoxic, emits only a small amount of smoke and is non-corrosive, in the technical field of resin composition, such as coating material for electric wire or cable, instead of a customary halogen-based flame retardant (see, for example, Patent Document 1). The diameter of magnesium hydroxide particle is, however, usually 10 µm or above and magnesium hydroxide particle having such a diameter present a problem, as they are not satisfactorily dispersible in a base polymer, but lower the mechanical and molding properties of a plastic composite containing magnesium hydroxide.

Moreover, magnesium hydroxide has to be added to a polymer at a concentration as high as about 60% by weight in order to exhibit its flame retardancy and a plastic composite containing such a high concentration of magnesium hydroxide has a problem, as its mechanical and molding properties are lowered (see, for example, Patent Document 2). This is due to a reduction in the relative amount of the polymer by the addition of a large amount of magnesium hydroxide and the hydrophilicity of magnesium hydroxide itself.

In order to solve these problems, attempts have been made to render the surface of magnesium hydroxide hydrophobic by a higher fatty acid, etc. or mix various kinds of assistants to thereby reduce the amount of magnesium hydroxide to be added (see, for example, Patent Literature 3). No such attempts have, however, made it possible to obtain any fully satisfactory resin composition.
[Patent Document 1]
   JP-A-2000-63583 (pages 1 and 2)
[Patent Document 2]
   JP-A-2001-288313 (page 2)
[Patent Document 3]
   JP-A-2002-128966 (pages 1 and 2)

We, the inventors of this invention, aim at solving the problems of the prior art as stated above andprovidingmagnesium hydroxide and composite magnesium hydroxide-silica particle which can make resin composition and electric wire or cable which are excellent in flame retardancy and good in wear resistance and other aspects of strength, elasticmodulus, etc., method for the manufacture thereof, method for the surface treatment thereof, and resin composition and electric wire or cable made by using the same.

### DISCLOSURE OF THE INVENTION

As a result of our energetic study made to achieve the above aim, we have made this invention by discovering that particle having a smaller diameter than usual can be obtained by considering a method of synthesizing magnesium hydroxide, and that the co-addition of silica particle to a resin composition makes it sufficient to add a smaller amount of magnesium hydroxide than so far.

Thus, this invention is of the constitution as set forth below.
(1) Magnesium hydroxide characterized in that it is synthesized by the reaction of a magnesium salt and a metal hydroxide.
(2) Magnesium hydroxide according to the above (1), characterized in that the magnesium salt and metal hydroxide are reacted in a temperature range of from 10 to 100°C.
(3) Magnesium hydroxide according to the above (1), characterized by a particle diameter in a range of from 10 nm to 10 µm.
(4) Magnesium hydroxide according to the above (1), characterized by having its surface treated with a reactive silicone.
(5) Magnesium hydroxide according to the above (4), characterized by its surface treated simultaneously with its synthesis.
(6) Magnesium hydroxide according to the above (4), characterized by having its surface treated with a solution containing the reactive silicone.
(7) Magnesium hydroxide according to the above (4), characterized in that an amount of surface treatment is from 1 to 2% by weight.
(8) A method of manufacturing magnesium hydroxide, characterized by reacting a magnesium salt and a metal hydroxide.
(9) The method of manufacturing magnesium hydroxide according to the above (8), characterized by reacting the magnesium salt and metal hydroxide in a temperature range of from 10 to 100°C.
(10) The method of manufacturing magnesium hydroxide according to the above (8), characterized in that the particle diameter of magnesium hydroxide obtained is in the range of from 10 nm to 10 µm.
(11) A composite magnesium hydroxide-silica particle characterized in that it is obtained by reacting a magnesium salt and a metal hydroxide in the presence of silica particles.
(12) A composite magnesium hydroxide-silica particle characterized in that it is obtained by mixing a dispersion after synthesizing magnesium hydroxide by the reaction of a magnesium salt and a metal hydroxide, and a dispersion after synthesizing silica.
(13) A composite magnesium hydroxide-silica particle characterized in that it is obtained by mixing magnesium hydroxide and silica mechanically.
(14) A composite magnesium hydroxide-silica particle characterized in that it is obtained by forming magnesium hydroxide and silica into a slurry with a solvent.
(15) The composite magnesium hydroxide-silica particle according to the above (11) or (12), characterized in that the magnesium salt and metal hydroxide are reacted in a temperature range of from 10 to 100°C.
(16) The composite magnesium hydroxide-silica particle according to any one of the above (12) to (14), characterized by a particle diameter in the range of from 10 nm to 10 µm.
(17) The composite magnesium hydroxide-silica particles according to any one of the above (12) to (14), characterized by having its surface treated with a reactive silicone.
(18) The composite magnesium hydroxide-silica particle according to the above (17), characterized by its surface treated simultaneously with its manufacture.
(19) The composite magnesium hydroxide-silica particle according to the above (17), characterized by its surface treated with a solution containing the reactive silicone.
(20) The composite magnesium hydroxide-silica particle according to the above (17), characterized in that an amount of surface treatment is from 1 to 2% by weight.
(21) A method of manufacturing composite magnesium hydroxide-silica particle, characterized by reacting a magnesium salt and a metal hydroxide in the presence of silica particle.
(22) A method of manufacturing composite magnesium hydroxide-silica particle, characterized by mixing a dispersion after synthesizing magnesium hydroxide by the reaction of a magnesium salt and a metal hydroxide and a dispersion after synthesizing silica.
(23) A method of manufacturing composite magnesium hydroxide-silica particle, characterized by mixing magnesium hydroxide and silica mechanically.
(24) A method of manufacturing composite magnesium hydroxide-silica particle, characterized by forming magnesium hydroxide and silica into a slurry with a solvent.
(25) The method of manufacturing composite magnesium hydroxide-silica particle according to the above (21) or (22), characterized by reacting the magnesium salt and metal hydroxide in a temperature range of from 10 to 100°C.
(26) The method of manufacturing composite magnesium hydroxide-silica particle according to any one of the above (21) to (24), characterized in that a particle diameter of the composite magnesium hydroxide-silica particle is in the range of from 10 nm to 10 µm.
(27) A method of surface treatment characterized by the surface treatment of magnesium hydroxide or composite magnesium hydroxide-silica particle with a reactive silicone.
(28) The method of surface treatment according to the above (27), characterized in that the surface treatment is performed simultaneously with the synthesis or manufacture of magnesium hydroxide or composite magnesium hydroxide-silica particle.
(29) The method of surface treatment according to the above (27), characterized in that the surface treatment is performed with a solution containing the reactive silicone.
(30) The method of surface treatment according to the above (27), characterized in that an amount of surface treatment is from 1 to 2% by weight.
(31) A resin composition characterized by containing magnesium hydroxide according to any one of the above (1) to (7), or composite magnesium hydroxide-silica particle according to any one of the above (11) to (19) and a resin.
(32) A resin composition characterized by containing magnesium hydroxide particle, a silica particle and a resin.
(33) The resin composition according to the above (32), characterized in that the magnesium hydroxide particle has its surface treated.
(34) The resin composition according to the above (33), characterized in that the magnesiumhydroxide particle has their surface treated with stearic acid.
(35) The resin composition according to the above (33), characterized in that an amount of surface treatment is from 1 to 2% by weight per magnesium hydroxide.
(36) The resin composition according to the above (32), characterized in that the magnesium hydroxide particle is of magnesium hydroxide according to any one of the above (1) to (7).
(37) The resin composition according to the above (32), characterized in that the silica particle are of fumed or precipitated silica.
(38) The resin composition according to the above (37), characterized in that the silica particle is of fumed silica.
(39) The resin composition according to the above (32), characterized in that the silicaparticlehas its surface treated with a methyl group.
(40) The resin composition according to the above (32), characterized by containing a total of from 30 to 50% by weight of magnesium hydroxide and silica particle.
(41) The resin composition according to the above (40), characterized by containing from 2 to 20% by weight of silica particles.
(42) The resin composition according to the above (31) or (32), characterized in that the resin is low-density polyethylene.
(43) An electric wire or cable having a sheath layer formed from a resin composition according to the above (31) or (32).

As it is synthesized by the reaction of a magnesium salt and a metal hydroxide, the magnesium hydroxide of this invention has a particle diameter in the range of from 10 nm to 10 µm which is smaller than ever, is better dispersible in a base polymer and no longer lowers the mechanical or molding properties of any plastic composite containing the magnesium hydroxide.

The resin composition containing magnesium hydroxide particle, silica particle and a resin is satisfactory in flame retardancy even if its magnesium hydroxide content may be 40% by weight or lower, and as its magnesium hydroxide content is not too high as compared with its resin content, it does not have its mechanical or molding properties lowered, but rather has its yield strength, elongation, etc. improved.

Although the reason for the improved flame retardancy of the resin composition containing a relatively small amount of magnesium hydroxide is not clear, it is possible that the silica particle dispersed in the resin may hinder the movement of the polymer (resin) melted during the combustion of the resin composition, thereby preventing dripping and improving the flame retardant effect of magnesium hydroxide.

### BRIEF DESCRIPTION OF THE DRAWINGS

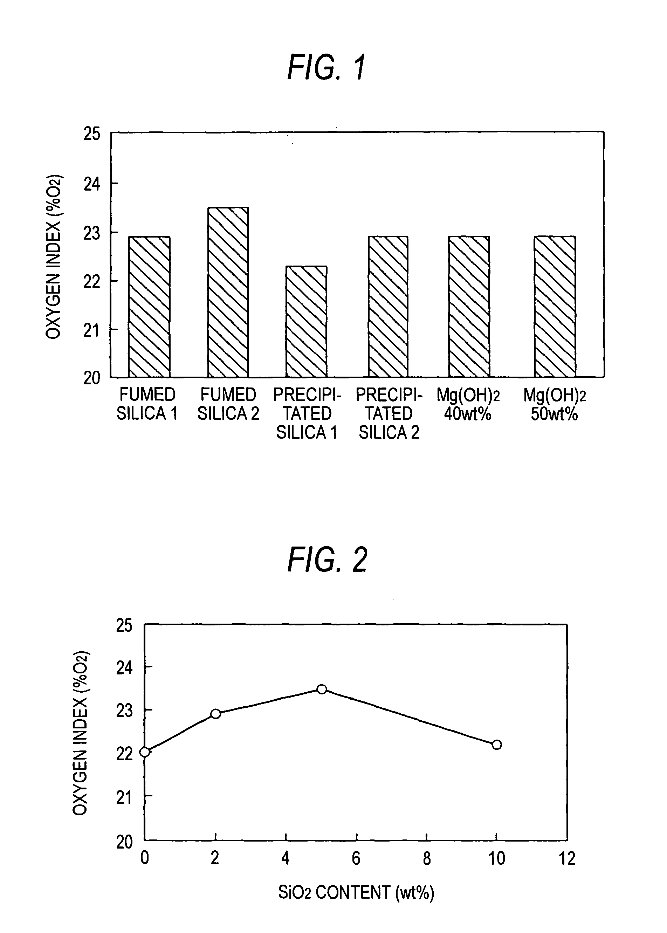

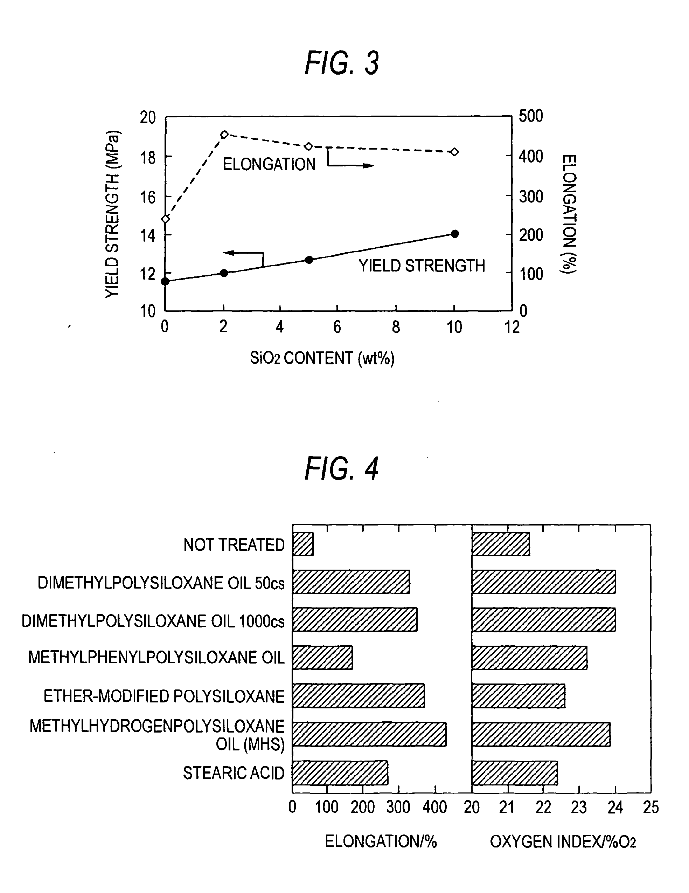

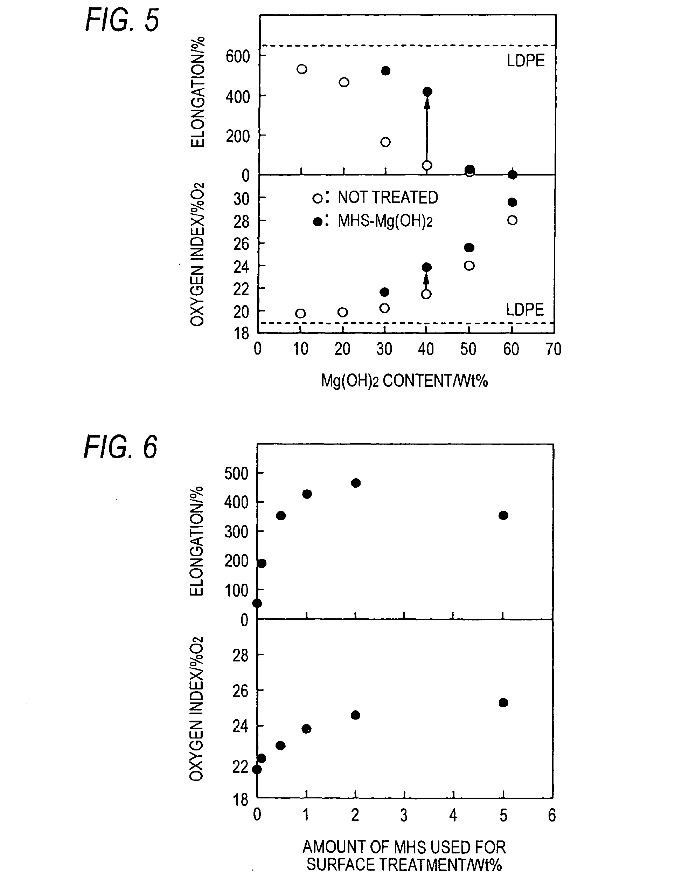

Fig. 1 is a graph showing the flame retardancy of composite sheets containing magnesium hydroxide and various kinds of silica according to Example 2, Fig. 2 is a graph showing the relation between the silica content of the composite sheet containing magnesium hydroxide and silica according to Example 2 and their flame retardancy, Fig. 3 is a graph showing the relation between the silica content of the composite sheet containing magnesium hydroxide and silica according to Example 2 and their elongation and yield strength, Fig. 4 is a graph showing the results covering the elongation and oxygen index of each of LDPE/Mg (OH)₂ composite containingmagnesiumhydroxide having its surface treated with various kinds of compounds, Fig. 5 is a graph showing the results covering the magnesium hydroxide content of each LDPE/Mg(OH)2 composite containing magnesium hydroxide having its surface treated and its elongation and oxygen index and Fig. 6 is a graph showing the results covering the amount of the agent used for the surface treatment of each LDPE/Mg(OH)₂ composite containing magnesium hydroxide having its surface treated and its elongation and oxygen index.

### BEST MODE FOR CARRYING OUT THE INVENTION

The invention will now be described in detail.

The method of manufacturing magnesium hydroxide synthesized by the reaction of a magnesium salt and a metal hydroxide is preferably carried out with an aqueous solution containing the magnesium salt and metal hydroxide in a molar ratio ranging from 1:1 to 1:0.5 (magnesium salt : metal hydroxide) . In the event that the metal hydroxide has a molar ratio over 1 to the magnesium salt, it is likely that some metal hydroxide may remain in the reaction system and adversely affect the properties of the product in use. In the event that it is less than 0.5, it is not only likely that magnesium hydroxide may have a large particle diameter, but it is also likely that its yield may be too low for mass production.

The reaction is preferably caused to take place in an aqueous solution having a concentration of from 0.1 to 10 moles/liter and a temperature of from 10 to 120°C. In the event that the concentration of the aqueous solution is below 0.1 mole/liter, it is likely that the amount of water which is used may be too large for the yield, and that the time for treatment may be too long to be acceptable for mass production. In the event that it exceeds 10 moles/liter, it is likely that the aqueous solution may have a high viscosity affecting operating efficiency adversely.

It is possible to obtain magnesium hydroxide by removing any excessive ion from the reaction product and drying it.

As to a method of removing any excessive ion, there is no particular limitation, but it is possible to employ a method using a centrifugal separator, apress, an ionpermeablemembrane, an ultrafiltration membrane, etc.

As to a drying method, there is no particular limitation, but it is possible to use appropriately any known method, such as oven drying, spray drying, slurry drying or Agglomaster drying.

Magnesium hydroxide synthesized as described is very fine and can improve mechanical properties, wear resistance and flame retardancy by forming a composite with a resin.

The following methods can be mentioned for forming a composite of magnesium hydroxide and silica:
1) A method in which silica particle is added during the sysnthesis of magnesium hydroxide and they are dried together.
2) A method in which a dispersion containing magnesium hydroxide as synthesized is mixed with a dispersion containing silica as synthesized and the mixture is dried.
3) A method in which magnesium hydroxide and silica are mixed together mechanically.
4) A method in which magnesium hydroxide and silica are formed into a slurry by a solvent and the slurry is dried.

As regards the method 1), silica or an aqueous solution thereof is added to an aqueous solution of a magnesium salt or a metal hydroxide or both, a reaction is caused to take place in accordance with the method of synthesizing magnesium hydroxide as described above and the reaction product is dried.

There is no particular limitation as to the particle diameter of silica which is added, but a range of from 1 nm to 1 µm is adequate in view of the later formation of a composite with a resin.

As regards the method 2), silica or a dispersion thereof is added to a dispersion containing magnesium hydroxide as synthesized, and the resulting product is dried.

There is no particular limitation as to the particle diameter of silica which is added, but a range of from 1 nm to 1 µm is adequate in view of the later formation of a composite with a resin.

As regards the method 3), magnesium hydroxide and silica can be manufactured by using an apparatus, such as a ball mill, an attritor, a mechanofusion system, an Agglomaster, a jet mill or a counter jet mill.

As regards the method 4), it is equal to the method 2) if commercially available magnesium hydroxide other than synthesized magnesium hydroxide is used as a raw material.

Composite magnesium hydroxide-silica particles can be manufactured by any of the methods 1) to 4) and are in the shape of fine silica particles adhering to magnesium hydroxide in a surrounding way.

The magnesium salt used for the purpose of this invention is not particularly limited, but magnesium chloride is, for example, preferred.

The metal hydroxide used for the purpose of this invention is not particularly limited, but sodium hydroxide is, for example, preferred.

The magnesiumhydroxide particle and composite magnesium hydroxide-silica particle may have their surfaces treated.

The substance given to the particles by their surface treatment is not particularly limited, but a reactive silicone, stearic acid, etc. can be mentioned.

The reactive silicone is not particularly limited, but it is possible to mention, for example, dimethyl silicone oil, methylphenyl silicone oil, methylhydrogen silicone oil and an organic modified silicone oil having a functional group, such as an amino, epoxy, carboxyl, carbinol, silanol, methacryl, mercapto or phenol group.

The reactive silicones have their own functional groups improve the dispersibility of magnesium hydroxide. These silicones also serve to improve flame retardancy by forming a glass constituent (SiO₂) when baked.

Description will now be made of methods for the surface treatment of magnesium hydroxide particles and composite magnesium hydroxide-silica particles.

These methods are, for example, employed:
1) A method of surface treatment made simultaneously with the synthesis of particles.
   A method in which after the reaction for the synthesis of particles and the removal of any excessive ion, a surface treatment agent and a solvent are added into a dispersion and after drying, they are caused to undergo a reaction in a range of from several minutes to two hours at a temperature of from 100 to 200°C.
2) A method of surface treatment with a solution.

A method in which particles are impregnated with a solution containing a surface treatment agent and after the whole particles are covered with the surface treatment agent, they are dried and caused to undergo a reaction in a range of from several minutes to two hours at a temperature of from 100 to 200°C, or a method in which the particles caused to pass through a mist of a solution containing a surface treatment agent are dried and caused to undergo a reaction in a range of from several minutes to two hours at a temperature of from 100 to 200°C.

The amount of the surface treatment agent relative to magnesium hydroxide is not particularly limited, but is preferably in the range of from 0.1 to 5.0% by weight for improving the elongation of a resin composition in which it is used as will be described, more preferably in the range of from 0.5 to 5.0% by weight and still more preferably in the range of from 1 to 2% by weight.

The amount of the surface-treated magnesium hydroxide which the resin composition contains as will be described is not particularly limited, but is preferably in the range of from 30 to 40% by weight.

Description will now be made of a resin composition containing magnesium hydroxide particles, silica particles and a resin.

The magnesium hydroxide particle used in the resin composition containing magnesium hydroxide particle, silica particle and a resin preferably have their surfaces treated as stated above and more preferably have their surfaces treated with stearic acid.

The silica particle used in the resin composition containing magnesium hydroxide particle, silica particle and a resin are not particularly limited, but while they may be of either fumed or precipitated silica, fume silica ispreferable, as its particles are very fine and well dispersible in the resin. The silica particles preferably have their surfaces treated with a methyl group (CH₃ group) . The use of fumed silica having its surface treated with a methyl group achieves an improved adhesion between the resin and silica and an improved flame retardancy.

The contents of magnesium hydroxide and silica particle in the resin composition are not particularly limited, but may be selected so that its mechanical and molding properties may not be lowered by a reduction in the amount of the polymer relative to the magnesium hydroxide and silica particles, and so that sufficient flame retardancy may be imparted to it, though the total of magnesium hydroxide and silica particles is preferably in the range of from 30 to 50% by weight and more preferably in the neighborhood of 40% by weight.

The content of silica particle is preferably in the range of from 2 to 20% by weight and more preferably 5% by weight.

As to a method of manufacturing a resin composition containing magnesium hydroxide, composite magnesium hydroxide-silica particles or silica particles and a resin (a method of forming a composite of particles and a resin), there is no particular limitation, but it is possible to use any commonly used processing machine, such as a twin-roll mill, a kneader, a Banbury mixer, an intermixing machine or a single- or twin-screw kneader.

As to the resinous material used in a resin composition containing magnesium hydroxide, composite magnesium hydroxide-silica particles or silica particles and a resin, there is no particular limitation, but it is possible to mention, for example, polyvinyl chloride (PVC), polyethylene (PE), polypropylene (PP), Teflon (registered trademark), polyethylene terephthalate (PET), nylon (PA), an ethylene-ethyl acrylate copolymer (EEA), an ethylene-vinyl acetate copolymer (EVA), polyether sulfone (PES), polyimide, polyphenylene sulfide (PPS), polyether nitrile (PEN), an olefin-based elastomer, a styrene-based elastomer, polybutylene terephthalate (PBT), nylon 6 (PA6), nylon 66 (PA66), nylon 46 (PA46), nylon 6T (PA6T (HPA)), polyphenylene ether (PPE), polyoxymethylene (POM), polyarylate (PAR), polyether imide (PEI), a liquid crystal polymer (LCP), a cyclic olefin copolymer (COC), polymethylpentene (PMP), a PP alloy, a PA66 alloy, polycarbonate (PC), acryl, silicone, an ethylene- propylene-diene terpolymer (EPDM), chloroprene, urethane, chlorinated polyethylene, nitrile or nitrile rubber (NBR) or a resin or rubber obtained by combining two or more kinds of such resins or rubbers.

Low-density polyethylene is preferred as the resin used in a resin composition containing magnesium hydroxide particles, silica particles and a resin.

Other additives may be added to the resin composition containing magnesium hydroxide, composite magnesium hydroxide-silica particles or silica particles and a resin. The additives are not particularly limited, but may be compounded chemicals, such as an aging inhibitor, an oxidation inhibitor, a lubricant and a filler.

Additives, such as magnesium silicate and calcium carbonate, can further be added to the resin composition to achieve a cost reduction, etc.

### EXAMPLES

The invention will now be described by examples, though this invention is not limited thereto.

### (Example 1)

A 0.75 mol/liter magnesium chloride solution and a 1.5 mol/liter sodium hydroxide solution were mixed and reacted at 60°C. As a result, magnesium hydroxide having a particle diameter of from 50 to 150 nm could be obtained.

### (Comparative Example 1)

Re-synthesis was performed from a magnesium hydroxide mineral (brucite). The particle diameter of magnesium hydroxide thereby obtained was in the range of from 500 to 1500 nm.

### (Example 2)

A composite was formed by using low-densitypolyethylene (LDPE, MIRASON 3530, product of Mitsui Chemical having a density of 0.924 g/cm³) as a base polymer, magnesium hydroxide obtained in Example 1 and having its surface treated with stearic acid and various kinds of fumed and precipitated silica as shown in Table 1 below.

**Table 1**

| | Particle diameter (µm) | Bulk density (g/ℓ) | Surface treatment |
|---|---|---|---|
| Fumed silica 1 | 0.012 | 50 | - |
| Fumed silica 2 | 0.012 | 50 | CH₃ group |
| Precipitated silica 1 | - | 120-160 | - |
| Precipitated silica 2 | 9-12 | - | - |

A composite sheet was first formed by melting the base polymer by means of two rolls having a temperature of from 120°C to 130°C, adding specific amounts of magnesium hydroxide and silica thereto and kneading them. The sheet was placed in a frame measuring 150 mm square by 1 or 3 mm in thickness and was compression molded into a sample sheet. The molding conditions included five minutes of preliminary compression under 30 kg at 170oC and two minutes of compression under 150 kg, followed by five minutes of cooling to room temperature. Test specimens were formed from the sample sheet for evaluation as to flame retardancy and mechanical properties. The test specimen for flame retardancy was a strip punched out from a 3 mm thick sheet and measuring 80 mm by 50 mm and evaluated for its oxygen index in accordance with JIS K 7201-2 by using a Model D candle type flammability tester (product of Toyo Seiki Seisakusho). As regards the mechanical properties, a dumbbell #3 test specimen as specified by JIS K 7113 was punched out from a 1 mm thick sheet and a tensile test was conducted by using a Strograph R (product of Toyo Seiki Seisakusho). Bench marks having a distance of 20 mm therebetween were made on the central portion of the test specimen and its elongation at rupture was determined at a pulling rate of 50 mm/min.

Fig. 1 shows the results covering the oxygen indexes of composite sheets made by adding 35% by weight of magnesium hydroxide having its surface treated with stearic acid and 5% by weight of various kinds of silica, respectively, to LDPE. For the sake of comparison, it also shows the results obtained when 40% and 50% by weight, respectively, of only magnesium hydroxide having its surface treated with stearic acid were added to LDPE. According to these results, higher oxygen indexes and improved flame retardancy were obtained when a part of magnesium hydroxide was replaced by silica, than when only magnesium hydroxide was added. This result was outstanding in the case of fumed silica and fumed silica having its surface treated with a CH₃ group gave still improved flame retardancy. It is considered that very fine fumed silica particles dispersed in LDPE hindered the movement of the molten polymer during the combustion of the composite and prevented its dripping, thereby improving the flame retardant effect of magnesium hydroxide. On the other hand, precipitated silica was apparently inferior to fumed silica in flame retardancy because of its larger partricles.

Fig. 2 shows the effect of fumed silica on the oxygen indexes of composites containing LDPE, magnesium hydroxide having its surface treated with stearic acid and fumed silica having its surface treated with CH₃. The total amount of magnesium hydroxide and fumed silica added to LDPE was 40% by weight in all of the cases. As a result, it was found that 5% by weight of fumed silica gave the highest oxygen index. It is considered that when the amount of fumed silica was less than 5% by weight, it was less effective for hindering the movement of the polymer during combustion, while the addition of more than 5% by weight of silica made the relative amount of magnesium hydroxide smaller, resulting in a lowered flame retardant effect and an increased oxygen index.

Fig. 3 shows the relation between the yield strength of each of the composites and its elongation. The addition of fumed silica increased the yield strength of the composite and improved its elongation. Particularly, the elongation achieved a drastic improvement with the addition of a small amount of silica and did not show any substantial lowering with an increase of its addition. The yield strength increased in proportion to the amount of silica added. This is apparently due to the reinforcing effect of fine silica particles dispersed in the polymer.

The foregoing results showed that the addition of fumed silica having its surface treated with CH₃ was effective for improving the flame retardancy of the LDPE-magnesium hydroxide composite. It was also found to improve the strength and elongation of the composite.

Explanation will now be made of the results of a review of the surface treatment of magnesium hydroxide.

Fig. 4 shows the results covering the elongation and oxygen index of each of LDPE/Mg(OH)₂ composites containing magnesium hydroxide having its surface treated with various kinds of compounds.

Magnesium hydroxide obtained in Example 1 had its surface treated with 1% by weight of each of the compounds shown in Fig. 4. The proportion of Mg(OH)₂ in each LDPE/Mg (OH)₂ composite was 40% by weight. The methods of determining the elongation and oxygen index were as stated before.

According to the results shown in Fig. 4, the surface treatment of magnesium hydroxide with various kinds of compounds, particularly silicone oils, improved the oxygen indexes of the LDPE/ Mg(OH)₂ composites and was effective for improving their flame retardancy. Their elongation was also improved as compared with the composite made by using untreated magnesium hydroxide. Methylhydrogen polysiloxane (MHS) was the most preferable of the silicone oils as the surface treatment agent.

Fig. 5 shows the results covering the amounts of magnesium hydroxide in LDPE/ Mg(OH)₂ composites containing magnesium hydroxide having its surface treated and their elongations and oxygen indexes. Methylhydrogen polysiloxane (MHS) which had been found as the most preferable by the results of the review shown in Fig. 4 was used for the surface treatment. The amount of MHS used for the surface treatment of magnesium hydroxide was 1% by weight as in the case of the review shown in Fig. 4. The broken lines in Fig. 5 show the levels of LDPE to which no magnesium hydroxide was added.

As is obvious from Fig. 5, an increase in the amount of magnesium hydroxide having its surface treated with MHS brought about an improvement in oxygen index of the LDPE/ Mg (OH)₂ composites and was effective for improving their flame retardancy. As regards their elongation, however, a downward tendency was observed with an excessive increase of Mg(OH)₂ having its surface treated with MHS. Nevertheless, a drop in elongation could be reduced on the composites containing from 30 to 40% by weight of Mg(OH)₂ having its surface treated with MHS, as compared with those containing the same amounts of Mg (OH)₂ having its surface not treated. This level of drop in elongation is permissible for the use of any LDPE material and the effect of the addition of Mg(OH)₂ having its surface treated with MHS for improved flame retardancy is of by far greater significance.

Moreover, Fig. 6 shows the results covering the amounts of the surface treatment agent used for LDPE/ Mg (OH) ₂ composites containing magnesium hydroxide having its surface treated and their elongations and oxygen indexes. Methylhydrogen polysiloxane (MHS) which had been found as the most preferable by the results of the review shown in Fig. 4 was used for the surface treatment. The amount of Mg(OH)₂ having its surface treated with MHS in each LDPE/Mg(OH)₂ composite was 40% by weight as found within the preferable range by the results of the review shown in Fig. 5.

As is obvious from Fig. 6, an increase up to 2% by weight in the amount of MHS used for the surface treatment brought about an improved oxygen index for any LDPE/ Mg(OH)₂ composite and was effective for improving its flame retardancy. In excess of 2% by weight, however, no further addition produced any better result. Its elongation was improved with an increase up to 2% by weight in the amount of MHS used for the surface treatment, too, but showed a somewhat dropping tendency at 5% by weight. It, therefore, follows that a range of from 1 to 2% by weight ispreferable as the amount of MHS used for the surface treatment.

### INDUSTRIAL APPLICABILITY

As it is synthesized by the reaction of a magnesium salt and a metal hydroxide, the magnesium hydroxide of this invention has a particle diameter in the range of from 10 nm to 10 µm which is smaller than ever, is better dispersible in a base polymer and no longer lowers the mechanical or molding properties of any plastic composite containing the magnesium hydroxide.

The resin composition containing magnesium hydroxide particles, silica particles and a resin is satisfactory in flame retardancy even if its magnesium hydroxide content may be 40% by weight or lower, and as its magnesium hydroxide content is not too high as compared with its resin content, it does not have its mechanical or molding properties lowered, but rather has its yield strength, elongation, etc. improved.

## Claims

1. Magnesium hydroxide **characterized in that** it is synthesized by the reaction of a magnesium salt and a metal hydroxide.

2. Magnesium hydroxide according to claim 1, **characterized in that** the magnesium salt and metal hydroxide are reacted in a temperature range of from 10 to 100°C.

3. Magnesium hydroxide according to claim 1, **characterized by** a particle diameter in a range of from 10 nm to 10 µm.

4. Magnesium hydroxide according to claim 1, **characterized by** having its surface treated with a reactive silicone.

5. Magnesium hydroxide according to claim 4, **characterized by** its surface treated simultaneously with its synthesis.

6. Magnesium hydroxide according to claim 4, **characterized by** having its surface treated with a solution containing the reactive silicone.

7. Magnesium hydroxide according to claim 4, **characterized in that** an amount of surface treatment is from 1 to 2% by weight.

8. A method of manufacturing magnesium hydroxide, **characterized by** reacting a magnesium salt and a metal hydroxide.

9. The method of manufacturing magnesium hydroxide according to claim 8, **characterized by** reacting the magnesium salt and metal hydroxide in a temperature range of from 10 to 100°C.

10. The method of manufacturing magnesium hydroxide according to claim 8, **characterized in that** the particle diameter of magnesium hydroxide obtained is in the range of from 10 nm to 10 µm.

11. A composite magnesium hydroxide-silica particle **characterized in that** it is obtained by reacting a magnesium salt and a metal hydroxide in the presence of silica particles.

12. A composite magnesium hydroxide-silica particle **characterized in that** it is obtained by mixing a dispersion after synthesizing magnesium hydroxide by the reaction of a magnesium salt and a metal hydroxide, and a dispersion after synthesizing silica.

13. A composite magnesium hydroxide-silica particle **characterized in that** it is obtained by mixing magnesium hydroxide and silica mechanically.

14. A composite magnesium hydroxide-silica particle **characterized in that** it is obtained by forming magnesium hydroxide and silica into a slurry with a solvent.

15. The composite magnesium hydroxide-silica particle according to claim 11 or 12, **characterized in that** the magnesium salt and metal hydroxide are reacted in a temperature range of from 10 to 100°C.

16. The composite magnesium hydroxide-silica particle according to any one of claims 12 to 14, **characterized by** a particle diameter in the range of from 10 nm to 10 µm.

17. The composite magnesium hydroxide-silica particles according to any one of claims 12 to 14, **characterized by** having its surface treated with a reactive silicone.

18. The composite magnesium hydroxide-silica particle according to claim 17, **characterized by** its surface treated simultaneously with its manufacture.

19. The composite magnesium hydroxide-silica particle according to claim 17, **characterized by** its surface treated with a solution containing the reactive silicone.

20. The composite magnesium hydroxide-silica particle according to claim 17, **characterized in that** an amount of surface treatment is from 1 to 2% by weight.

21. A method of manufacturing composite magnesium hydroxide-silica particle, **characterized by** reacting a magnesium salt and a metal hydroxide in the presence of silica particle.

22. A method of manufacturing composite magnesium hydroxide-silica particle, **characterized by** mixing a dispersion after synthesizing magnesium hydroxide by the reaction of a magnesium salt and a metal hydroxide and a dispersion after synthesizing silica.

23. A method of manufacturing composite magnesium hydroxide-silica particle, **characterized by** mixing magnesium hydroxide and silica mechanically.

24. A method of manufacturing composite magnesium hydroxide-silica particle, **characterized by** forming magnesium hydroxide and silica into a slurry with a solvent.

25. The method of manufacturing composite magnesium hydroxide-silica particle according to claim 21 or 22, **characterized by** reacting the magnesium salt and metal hydroxide in a temperature range of from 10 to 100°C.

26. The method of manufacturing composite magnesium hydroxide-silica particle according to any one of claims 21 to 24, **characterized in that** a particle diameter of the composite magnesium hydroxide-silica particle is in the range of from 10 nm to 10 µm.

27. A method of surface treatment **characterized by** the surface treatment of magnesium hydroxide or composite magnesium hydroxide-silica particle with a reactive silicone.

28. The method of surface treatment according to claim 27, **characterized in that** the surface treatment is performed simultaneously with the synthesis or manufacture of magnesium hydroxide or composite magnesium hydroxide-silica particle.

29. The method of surface treatment according to claim 27, **characterized in that** the surface treatment is performed with a solution containing the reactive silicone.

30. The method of surface treatment according to claim 27, **characterized in that** an amount of surface treatment is from 1 to 2% by weight.

31. A resin composition **characterized by** containing magnesium hydroxide according to any one of claims 1 to 7, or composite magnesium hydroxide-silica particle according to any one of claims 11 to 19 and a resin.

32. A resin composition **characterized by** containing magnesium hydroxide particle, a silica particle and a resin.

33. The resin composition according to claim 32, **characterized in that** the magnesium hydroxide particle has its surface treated.

34. The resin composition according to claim 33, **characterized in that** the magnesium hydroxide particle has their surface treated with stearic acid.

35. The resin composition according to claim 33, **characterized in that** an amount of surface treatment is from 1 to 2% by weight per magnesium hydroxide.

36. The resin composition according to claim 32, **characterized in that** the magnesium hydroxide particle is of magnesium hydroxide according to any one of claims 1 to 7.

37. The resin composition according to claim 32, **characterized in that** the silica particle are of fumed or precipitated silica.

38. The resin composition according to claim 37, **characterized in that** the silica particle is of fumed silica.

39. The resin composition according to claim 32, **characterized in that** the silica particle has its surface treated with a methyl group.

40. The resin composition according to claim 32, **characterized by** containing a total of from 30 to 50% by weight of magnesium hydroxide and silica particle.

41. The resin composition according to claim 40, **characterized by** containing from 2 to 20% by weight of silica particles.

42. The resin composition according to claim 31 or 32, **characterized in that** the resin is low-density polyethylene.

43. An electric wire or cable having a sheath layer formed from a resin composition according to claim 31 or 32.
